# FASCICULE DE BREVET EUROPEEN

(11) **EP 1 019 153 B1**
(45) Date de publication et mention de la délivrance du brevet: **03.04.2002**
(21) Numéro de dépôt: 98944012.8
(22) Date de dépôt: 17.09.1998
(51) Int. Cl.: A62D 3/00

(54) **UTILISATION D'UN AGENT COMPRENANT UN PHOSPHATE, CARBONATE ET SILICATE POUR L'ELIMINATION DES METAUX LOURDS CONTENUS DANS UN EFFLUENT AQUEUX**
VERWENDUNG EINES MITTELS WELCHES EIN PHOSPHAT, EIN CARBONAT UND EIN SILICAT ENTHÄLLT FÜR DIE ENTFERNUNG VON SCHWERMETALLEN AUS ABWÄSSERN
USE OF A COMPOSITION COMPRISING A PHOSPHATE CARBONATE AND SILICATE FOR ELIMINATING HEAVY METALS FROM AQUEOUS EFFLUENTS

(30) Priorité: 30.09.1997 FR 9712451
(43) Date de publication de la demande: 19.07.2000
(73) Titulaire: RHODIA CHIMIE, 92408 Courbevoie Cédex (FR)
(72) Inventeur: MOTTOT, Yves, F-92800 Puteaux (FR); KIEFER, J.-Claude, Lotissement Le Grand Caillouet, F-60460 Précy sur Oise (FR)
(74) Mandataire: Delenne, Marc
(86) Numéro de dépôt international: FR9801993
(87) Numéro de publication internationale: WO9916509

(56) Documents cités:
- WO-A-92/21409
- WO-A-96/14901
- GB-A- 2 162 223
- GB-A- 2 277 515
- US-A- 5 162 600
- DATABASE WPI Section Ch, Week 9710 Derwent Publications Ltd., London, GB; Class D15, AN 97-108793 XP002057453 & WO 97 02101 A (KANEBUCHI KAGAKU KOGYO KK), 23 janvier 1997

## Description

La présente invention concerne l'utilisation d'un agent pour l'élimination de métaux lourds contenus dans un effluent aqueux.

La législation dans le domaine des rejets des métaux lourds, dans le milieu naturel, est en constante évolution. Les effluents industriels tels que par exemple ceux issus des usines des industries chimiques, métallurgiques, électroniques, mécaniques et les eaux de lavage (ou d'épuration) des fumées d'usines d'incinération d'ordures ménagères ou de déchets industriels, notamment d'effluents industriels du type acides sulfuriques usés, sont des milieux susceptibles de contenir des métaux lourds. De même, certains sols sont pollués par la présence de tels métaux.

Ainsi, dans le domaine des eaux de lavage des fumées d'usines d'incinération d'ordures ménagères, le procédé le plus connu d'élimination des métaux lourds consiste en une précipitation basique effectuée à la chaux ; l'étape de décantation/séparation qui suit est généralement améliorée par l'incorporation d'un agent floculant

Mais ce procédé présente un certain nombre d'inconvénients.

D'une part, ce type d'effluent à traiter présente souvent une teneur très élevée en sels minéraux, ce qui peut gêner la précipitation complète des métaux lourds.

D'autre part, un volume très important de boue est généré par la précipitation à la chaux ; cette boue, après filtration et compaction sous forme de galette, doit être actuellement placée dans des décharges adaptées.

De plus, la composition de boue obtenue peut être difficile à stabiliser (ou immobiliser) par les techniques actuelles. Or, les futures réglementations relatives au stockage des déchets spéciaux ultimes rendent nécessaire la stabilisation (ou immobilisation) de la galette, avant admission sur le site de stockage, afin de réduire très sensiblement la lixiviation de ce type de déchet.

La présente invention a notamment pour but de fournir un moyen permettant une élimination (ou abattage) très efficace des métaux lourds, en particulier du cadmium, du nickel et du plomb, ainsi que, dans certains cas, du mercure, et ne présentant pas les inconvénients sus-mentionnés.

A cet effet, la présente invention propose l'utilisation d'un agent d'élimination (ou abattage) des métaux lourds présents dans un effluent aqueux ledit agent étant un produit mixte comprenant au moins un silicate de métal alcalin, au moins un carbonate de métal alcalin, au moins un composé du type phosphate, et, éventuellement, au moins un support, en particulier une argile.

Le Demandeur a trouvé, de manière surprenante, que l'utilisation d'un agent d'élimination de métaux lourds tel que défini précédemment permettait une élimination très efficace des métaux lourds du milieu les contenant, notamment du cadmium, du nickel et du plomb, et, quand il comprend un composé soufré, du mercure, et, de manière avantageuse, une amélioration de la décantation et de la séparation boue obtenue / sumageant liquide, une certaine amélioration de l'aptitude à la stabilisation de cette boue, c'est-à-dire une certaine amélioration de l'aptitude de celle-ci à la résistance à la lixiviation et une diminution de la teneur résiduelle en calcium du précipité par rapport à ce qui est obtenu avec le procédé à la chaux décrit précédemment.

L'agent d'élimination (ou captation) de métaux lourds comprend :
- au moins un composé consistant en un silicate de métal alcalin, appelé ci-après composé (A),
- au moins un composé consistant en un carbonate de métal alcalin, appelé ci-après composé (B),
- au moins un composé du type phosphate, appelé ci-après composé (C), et
- éventuellement, au moins un support.

Par métaux lourds, on entend en particulier les métaux de valence supérieure ou égale à 2, de préférence égale à 2, et notamment ceux choisis parmi l'antimoine, l'arsenic, le bismuth, le cadmium, le chrome, le cobalt, le cuivre, l'étain, le manganèse, le mercure, le molybdène, le nickel, l'or, le plomb, le thallium, le tungstène, le zinc, le fer, les métaux de la famille des actinides.

Les métaux lourds particulièrement visés par la présente invention sont le chrome, le cuivre, le fer, le zinc, et, à un degré supérieur, le cadmium, le nickel, le plomb.

Certains modes de réalisation de l'agent sont avantageusement utilisés lorsque le milieu à traiter contient, à titre de métaux lourds, au moins du mercure.

Les métaux lourds à éliminer se trouvent habituellement sous la forme d'ions, en particulier sous la forme de leurs cations respectifs (par exemple Cr³⁺, Cu²⁺, Ni²⁺, Fe²⁺, Fe³⁺, Cd²⁺, Hg²⁺, Pb²⁺, Zn²⁺).

Il est à noter que l'agent peut se révèler également efficace pour l'élimination de métaux comme l'aluminium et de métaux dits radioactifs comme l'uranium ou le thorium.

Ce milieu est constitué par un effluent aqueux, notamment un effluent aqueux industriel (c'est-à-dire un effluent aqueux provenant d'un procédé industriel).

Ce milieu peut être par exemple Un effluent aqueux formé par les eaux de lavage (ou d'épuration) des fumées d'incinération de déchets, notamment d'ordures ménagères, de déchets industriels, de déchets hospitaliers, par les eaux de lavage de matière solide, comme de la terre, contenant des métaux lourds, par des effluents aqueux de traitement de surface ; ce peut être un effluent aqueux issu d'une usine de l'industrie chimique, métallurgique, électronique, mécanique.

Le composé (A) est un silicate de métal alcalin, en particulier de sodium ou de potassium.

Le composé (A) est avantageusement un silicate de sodium. Ledit silicate de sodium présente alors en général un rapport molaire SiO₂/Na₂O compris entre 0,5 et 3,8, par exemple égal à environ 2.

Le composé (B) est un carbonate de métal alcalin, en particulier de sodium ou de potassium. Le composé (B) est avantageusement un carbonate de sodium.

Le rapport en poids entre le composé (B) et le composé (A) peut varier dans des plages de valeurs relativement larges. Néanmoins, ce rapport en poids composé (B) / composé (A) est en général compris entre 0,5 et 3,5, de préférence entre 1,1 et 2,5, notamment entre 1,5 et 2,0.

Lorsqu'il contient au moins un support, le produit mixte pour éliminer les métaux lourds d'un milieu selon l'invention, utilisable pour purifier ledit milieu, peut être considéré comme un produit composite formé :
- d'au moins un principe actif (ou agent de précipitation) constitué par :
   . au moins un composé (A) consistant en un silicate de métal alcalin,
   . au moins un composé (B) consistant en un carbonate de métal alcalin,
   . au moins un composé (C) du type phosphate; et
- d'au moins un support (ou substrat).

Le support éventuellement contenu dans l'agent selon l'invention est, de manière préférée, une argile.

L'argile alors contenue dans l'agent selon l'invention peut être d'origine naturelle ou synthétique.

L'argile ainsi employée dans l'agent selon l'invention présente avantageusement une teneur pondérale élevée en Al₂O₃; cette teneur est par exemple comprise entre 20 et 40 %.

On peut mettre en oeuvre, selon l'invention, une argile de structure lamellaire ou phyllosilicate.

On peut ainsi utiliser une argile choisie dans le groupe comprenant les kaolinites, les serpentines.

L'argile peut également être choisie dans le groupe comprenant les montmorillonites, les bentonites (en particulier alcalines), le talc, le mica.

De préférence, l'argile choisie appartient à l'un de ces deux groupes.

On peut éventuellement employer une argile de structure type chlorite.

L'agent selon l'invention contient en général, à titre d'argile, une montmorillonite ou une bentonite.

La teneur en support, en particulier en argile, de l'agent selon l'invention est habituellement comprise entre 5 et 90 % en poids, par exemple entre 10 et 35 % en poids, par rapport au poids total dudit agent.

La présence d'un composé (C) du type phosphate dans l'agent selon la présente invention est essentielle.

Ce composé (C) est un composé minéral, contenant (ou apportant) avantageusement au moins une fonction phosphate.

Il peut être choisi parmi les orthophosphates, les pyrophosphates, les tripolyphosphates, les métaphosphates, les hypophosphates, les monophosphates, les diphosphates de métal alcalin, en particulier de sodium ou de potassium, ou de métal alcalino-terreux, en particulier de magnésium.

On peut en particulier utiliser un diphosphate ou un pyrophosphate de potassium.

La mise en oeuvre d'orthophosphate de magnésium (Mg₃(PO₄)₂, xH₂O) peut se révèler intéressante, notamment du fait de sa solubilité très faible, ce qui peut se traduire par une teneur résiduaire en phosphate du milieu, après traitement à l'aide de l'agent selon l'invention, également très faible.

De préférence, le composé (C) est un pyrophosphate de sodium (Na₄P₂O₇, xH₂O), un tripolyphosphate de sodium (Na₅P₃O₁₀, xH₂O) ou, de manière encore plus préférée, un orthophosphate de sodium (Na₃PO₄, xH₂O).

La teneur en composé (C) de l'agent selon l'invention peut être comprise entre 1 et 30 % en poids ; elle est de préférence comprise entre 5 et 20 % en poids.

Un exemple particulièrement intéressant d'agent selon l'invention présente la composition suivante : silicate de sodium / carbonate de sodium / orthophosphate de sodium.

Lorsque le milieu à traiter contient du mercure, alors, si l'on souhaite l'abattre plus efficacement, l'agent selon l'invention comprend avantageusement en outre au moins un composé soufré (D).

Ce composé (D) peut être un composé soufré minéral.

En général, l'agent ne contient pas alors de support, en particulier d'argile.

A titre de composé soufré minéral, on peut employer un sulfure minéral, en particulier un sulfure de baryum (BaS) ou de strontium (SrS), ou, de préférence, un (poly)thiocarbonate minéral, notamment un (poly)thiocarbonate de métal alcalin, par exemple de potassium ou de sodium. On peut ainsi utiliser tout sel de l'acide thiocarbonique, comme le thiocarbonate de potassium (K₂CS₃).

Cependant, le composé (D) est, de manière préférée, un composé soufré organique (ou composé dit organosoufré).

L'agent contient alors préférentiellement au moins un support, en particulier une argile.

A titre de composé soufré organique, on peut utiliser un organothiophosphate ou un organodithiophosphate, en particulier un dialkyl- ou diaryl-dithiophosphate de métal alcalin, par exemple de sodium.

Les dialkyl- ou diaryl-dithiophosphates de métal alcalin utilisables répondent notamment à la formule suivante : 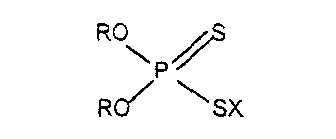 dans laquelle X est un métal alcalin, par exemple le sodium, R est un radical aryle ou, de préférence, alkyle, par exemple, méthyle, éthyle, n-propyle, isopropyle, méthyl-1 propyle, isobutyle.

A titre de composé soufré organique, on peut employer, de préférence, un composé (poly)mercapto, notamment un composé mercapto, dimercapto ou trimercapto. Ce composé soufré organique peut alors être une triazine (par exemple une triazine-as ou, de préférence, une triazine-S), substituée par 1, 2 ou 3 radicaux monovalents -SH.

Plus particulièrement, ce composé soufré organique est la trimercapto triazine-S, qui répond à la formule suivante :

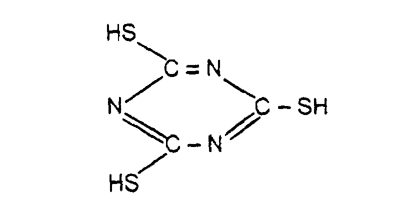

Le composé soufré (D) est préférentiellement localisé, dans le support, au coeur de l'agent.

Cette localisation au coeur du produit mixte permet notamment une dissolution retardée du composé soufré (D) lors de l'utilisation dudit produit mixte dans un milieu liquide ; le Demandeur a constaté que la dissolution du composé soufré (D) se produit avec un certain retard par rapport aux dissolutions des constituants (A), (B) et (C).

Cette dissolution retardée présente notamment l'avantage de réduire la quantité nécessaire de composé soufré dans l'agent selon l'invention.

La teneur en composé soufré (D) de l'agent selon l'invention peut être comprise entre 0,01 et 5 %, en particulier entre 0,1 et 4 %, en poids ; elle est de préférence comprise entre 0,4 et 3 %, par exemple entre 0,5 et 2 %, en poids.

Les agents, qui contiennent les composés (A), (B), (C), et, éventuellement (mais non préférentiellement) un support, en particulier une argile, sont préparés par tout procédé adéquat.

On additionne, généralement sous agitation, du composé (B) sous forme solide et du composé (C) sous forme solide (et du support éventuel) dans un granulateur, de préférence un granulateur mélangeur, et on pulvérise sur le mélange (généralement sous agitation) dans ledit granulateur une solution aqueuse du composé (A), en particulier à une pression de pulvérisation comprise entre 5 et 15 bars ; la granulation peut s'effectuer à l'aide d'un granulateur à assiettes ou d'un granulateur de type Lodige. La solution aqueuse du composé (A), dont le pH est habituellement compris entre 10 et 14, peut être préalablement chauffée notamment à une température comprise entre 60 et 90 °C, par exemple entre 70 et 85 °C.

Si le composé (A) est un silicate de sodium, on emploie en général une solution aqueuse de silicate de sodium présentant un rapport molaire SiO₂/Na₂O compris entre 0,5 et 3,8, par exemple égal à environ 2 et une concentration en silicate, exprimée en SiO₂, comprise entre 0,1 et 10 mol/l, par exemple entre 0,2 et 8 mol/l.

Cette étape de mélange (pulvérisation en particulier) est de préférence suivie d'un séchage, en général dans un sécheur tournant, habituellement entre 30 et 40 °C, puis d'un nouveau mélange avec une solution aqueuse du composé (A), mélange consistant avantageusement en une pulvérisation, dans des conditions telles que décrites plus haut, de ladite solution sur le produit issu de ce dernier séchage, préalablement réintroduit dans un granulateur (par exemple celui employé auparavant), de préférence un granulateur mélangeur.

Une étape intermédiaire de tamisage après le premier séchage et/ou une étape de tamisage finale peuvent être mises en oeuvre selon la granulométrie souhaitée.

Pour préparer un agent comprenant en outre un composé soufré (D), on met en oeuvre tout procédé adéquat permettant de préférence d'introduire le composé soufré au coeur dudit agent. Un procédé particulièrement préféré lorsque l'on souhaite alors préparer un agent contenant un support, tel qu'une argile, va être décrit ci-dessous.

On incorpore d'abord le composé soufré (D) au coeur du support.

Pour cela, on additionne, généralement sous agitation, à un support, en particulier une argile, préalablement introduit dans un granulateur, de préférence un granulateur mélangeur, une solution aqueuse du composé soufré (D). La granulation peut s'effectuer à l'aide d'un granulateur à assiettes ou d'un granulateur de type Lodige.

La granulation est ensuite complétée par un séchage en lit fluide, de préférence à une température comprise entre 40 et 100 °C, en général à une valeur maintenue constante pendant un certain temps après une montée en température. Cette température peut être comprise entre 40 et 70 °C, par exemple entre 45 et 55 °C. Elle peut aussi être comprise entre 70 et 100 °C, notamment entre 85 et 95 °C.

La dissolution retardée du composé soufré (D) lors de l'utilisation de l'agent selon l'invention dans un milieu liquide est également due, en général, à ce traitement thermique. La température du traitement thermique peut constituer un moyen de maîtriser la cinétique de dissolution du composé soufré (D).

Le produit séché obtenu, sous forme de granulés, peut être ensuite broyé (afin de réaliser notamment un démottage desdits granulés) et, éventuellement, tamisé (avec, par exemple, récupération uniquement de la fraction des granulés de taille inférieure à 400 µm, voire à 200 µm).

Suite à cette incorporation du composé soufré (D) au coeur du support, la préparation de l'agent selon l'invention peut se poursuivre comme décrit, en remplaçant, dans l'exposé précédent correspondant, support par support + composé (D).

L'agent se présente habituellement sous forme de granulés (co-granulés) ou poudre, dont la taille des grains est de préférence comprise entre 0,1 et 2,0 mm, en particulier entre 0,2 et 1,6 mm.

Il peut néanmoins se présenter sous une forme liquide, après avoir été mis en suspension dans l'eau ; aucun support ne rentre alors en général dans la composition de l'agent.

De manière générale, l'agent présente une teneur pondérale en eau libre (ou humidité) comprise entre 10 et 30 %, de préférence entre 15 et 20 %. Cette teneur en eau peut être déterminée par la mesure de perte de masse par calcination à 350 °C pendant 6 heures.

L'utilisation d'au moins un agent pour éliminer des métaux lourds d'un effluent (ou solution) aqueuse, peut être mise en oeuvre de la manière suivante.

On introduit l'agent selon l'invention dans l'effluent liquide à traiter, sous agitation. Le pH final de la suspension contenant ledit agent qui y a été ajouté est de préférence compris entre 7 et 11 ou ajusté à une valeur comprise entre 7 et 11 par addition préalable d'une base ou d'un acide ; ledit pH peut être en particulier (ajusté) aux environs de 9. Le pH final dépend de la quantité d'agent introduit dans l'effluent liquide à traiter et du pH initial dudit effluent. On poursuit l'agitation, par exemple pendant 5 à 60 minutes. On peut laisser ensuite reposer (décanter) la suspension, à température ambiante, pendant un certain temps, en général entre 0,5 et 24 heures, notamment entre 0,5 et 6 heures. Le temps de décantation peut être réduit si on utilise des méthodes de décantation rapides connues de l'homme du métier. Puis, on sépare le précipité formé, c'est-à-dire l'agent selon l'invention chargé en métaux lourds, notamment en cadmium, nickel, plomb, par décantation, filtration et/ou centrifugation de la suspension.

Généralement, le milieu à traiter contient 0,5 à 6000 mg/l, par exemple 1 à 1000 mg/l, notamment 2 à 300 mg/l de métaux lourds.

La quantité d'agent ajouté au milieu à traiter est telle que le rapport molaire (SiO₂+CO₃²⁻)/(cations présents dans le milieu à traiter) soit, en général, compris entre 0,7 et 2,5, par exemple entre 1.0 et 2,2, notamment entre 1,1 et 1,9. On entend ici par cations présents dans le milieu à traiter les cations de métaux lourds et les cations Ca²⁺.

L'utilisation des agents permet, de manière avantageuse, une élimination très efficace des métaux lourds, en particulier du cadmium, du nickel et du plomb, voire du mercure pour certains modes de réalisation de l'invention, notamment dans une plage de valeurs de pH assez large, en général entre 7 et 11.

De plus, on constate que, après séparation, le précipité formé, c'est-à-dire l'agent chargé en métaux lourds, présente de préférence une aptitude satisfaisante à la stabilisation (ou immobilisation). Il présente un comportement très acceptable vis-à-vis de la lixiviation : il est en effet peu lixiviable, c'est-à-dire qu'il ne libère quasiment pas ou peu de cations de métaux lourds qu'il contient lorsqu'il est mis en présence d'eau ; les quantités d'espèces chimiques métaux lourds dans des lixiviats obtenus à partir de tests de lixiviation classiquement réalisés sont relativement faibles.

Si la présence d'un support dans l'agent permet, en général, une précipitation localisée en périphérie dudit support, elle permet également, en particulier dans le cas de l'argile, de favoriser, de manière surprenante, dans le cas où l'agent selon l'invention comprend un composé du type carbonate, la décantation, notamment d'augmenter la vitesse de décantation. De même, elle peut également permettre de diminuer les faibles teneurs en métaux lourds des lixiviats tels que mentionnés précédemment. Elle est particulièrement intéressante lorsque l'agent est utilisé notamment en finition, c'est-à-dire pour l'élimination des dernières traces de métaux lourds.

Les exemples suivants illustrent l'invention sans toutefois en limiter la portée.

### EXEMPLE 1

1) 4,7 kg de Na₂CO₃ et 0,8 kg d'orthophosphate de sodium (Na₃PO₄, 12H₂O) sont introduits dans un granulateur mélangeur Lodige d'une capacité de 20 litres ; une homogénéisation du mélange est réalisée à 160 tours/min (vitesse de rotation des socs), pendant 20 minutes.

On pulvérise ensuite sur le mélange se trouvant dans le granulateur mélangeur fonctionnant à la même vitesse (160 tours/min) 4,0 kg d'une solution de silicate de sodium, préalablement chauffée à 75 °C, de rapport molaire SiO₂/Na₂O égal à 2, de concentration en silicate, exprimée en SiO₂, de 30,6 % en poids, à une pression de pulvérisation de 12 bars et à un débit de 13,5 l/h.

On récupère des granulés qui sont alors séchés, pendant 45 minutes, dans un sécheur tournant, à l'aide d'air chaud de telle manière que la température des granulés ne dépasse pas 50 °C.

Les granulés sont ensuite tamisés (au moyen d'un tamis de 1,6 mm) ; le refus est broyé à l'aide d'un broyeur FORPLEX à broches, équipé d'une grille de 3 mm. Les granulés tamisés et les granulés broyés sont réintroduits dans le granulateur mélangeur.

On pulvérise enfin sur ces granulés, se trouvant dans le granulateur mélangeur mis à nouveau en service, 1,8 kg d'une solution de silicate de sodium telle que définie plus haut (soit, au total des deux pulvérisations, 2,6 kg de silicate de sodium sec).

Puis on sèche, comme indiqué précédemment, les granulés obtenus.

On récupère ensuite, par tamisage, les granulés ayant une taille comprise entre 0,2 et 1,6 m ; leur taille moyenne est de 0,7 mm.

Le produit obtenu (P1) constitué par lesdits granulés comprend environ 32 % de silicate de sodium, 58 % de carbonate de sodium et 10 % d'orthophosphate de sodium.

### EXEMPLE 2

Un effluent aqueux d'eaux de lavage des fumées d'incinération d'ordures ménagères est reconstitué comme suit.

On dissout dans 5 litres de solution aqueuse de chlorure de sodium contenant 200 g de NaCI les quantités suivantes :

| | | | |
|---|---|---|---|
| Na₂SO₄ | 7,40 g | CuCl₂ | 0,07 g |
| CaCl₂,2H₂O | 18,40 g | CdCl₂ | 0,04 g |
| AlCl₃,6H₂O | 2,23 g | NiCl₂ | 0,10 g |
| FeCl₃,6H₂O | 1,22 g | PbCl₂ | 0,07 g |
| ZnCl₂ | 1,57 g | | |

Le pH de cet effluent est ajusté à la valeur 2 par ajout d'acide chlorhydrique. Ledit effluent présente les teneurs suivantes exprimées en mg/l :

| | | | |
|---|---|---|---|
| Ca²⁺ | 1000 | Cu²⁺ | 5 |
| Al³⁺ | 50 | Cd²⁺ | 5 |
| Fe²⁺+ Fe³⁺ | 50 | Ni²⁺ | 5 |
| Zn²⁺ | 150 | Pb²⁺ | 10 |

Deux essais d'élimination des métaux lourds contenus dans cet effluent sont réalisés avec :
- le produit P1 selon l'invention, préparé à l'exemple 1,
- un produit P2 non conforme à l'invention, se différenciant de P1 par l'absence d'orthophosphate de sodium (composition pondérale de P2 : 35,5 % de silicate de sodium et 64,5 % de carbonate de sodium).

Ces deux produits sont mis en oeuvre (séparément) pour un pH final de neutralisation de 9.

Les quantités de produit P1 et P2 à utiliser pour 500 ml dudit effluent sont les suivantes :
P1 : 4,5 g pour un pH final de 9,
P2 : 4,2 g pour un pH final de 9.

Pour chaque essai, on introduit de manière instantanée, sous agitation, dans 500 ml dudit effluent, la quantité de produit P1 (ou P2) indiquée ci-dessus et on maintient l'agitation pendant 30 minutes.

La suspension obtenue est ensuite laissée au repos, à température ambiante, pendant 4 heures.

Puis elle est centrifugée à 3000 tours/min pendant 10 minutes.

On mesure les concentrations suivantes (tableau 1) en diverses espèces de l'effluent épuré (c'est-à-dire la partie surnageante) par toute méthode appropriée (notamment ICP/MS (spectroscopie d'émission plasma avec détection masse (appareillage utilisé : ELAN 5000, PERKIN ELMER)) pour les éléments Cd et Pb, et ICP/OES (spectroscopie d'émission plasma avec détection optique (appareillage utilisé :
SOPRA DPS 1500)) pour les éléments Ca, Al, Fe, Zn, Cu et Ni).

**TABLEAU 1**

| Espèce | Teneur initiale (mg/l) | Teneur après traitement avec P1 (mg/l) | Teneur après traitement avec P2 (mg/l) |
|---|---|---|---|
| Ca²⁺ | 1000 | 5 | 25 |
| Al³⁺ | 50 | < 0,2 | < 0,2 |
| Fe²⁺+Fe³⁺ | 50 | < 0,1 | < 0,1 |
| Zn²⁺ | 150 | < 0,3 | < 0,3 |
| Cu²⁺ | 5 | < 0,1 | < 0,1 |
| Cd²⁺ | 5 | < 0,1 | 0,4 |
| Ni²⁺ | 5 | < 0,1 | 0,4 |
| Pb²⁺ | 10 | <0.05 | 0,11 |

Les résultats indiqués dans le tableau ci-dessus montrent la très bonne efficacité de l'agent selon l'invention ; ils illustrent en particulier sa meilleure efficacité vis-à-vis du cadmium, du nickel et du plomb par rapport à un produit exempt de composé du type phosphate.

Il convient également de noter la diminution très sensible du taux de calcium à l'aide de l'agent selon l'invention. Dans le cas du traitement d'un effluent d'incinérateur, ceci peut présenter un intérêt lorsque ledit agent est utilisé en amont d'une étape de concentration ou de purification du chlorure de sodium par un procédé à l'aide de résine ou de membrane.

## Revendications

1. Utilisation, pour l'élimination de métaux lourds contenus dans un effluent aqueux, d'un agent comprenant :
- au moins un composé (A) consistant en un silicate de métal alcalin,
- au moins un composé (B) consistant en un carbonate de métal alcalin,
- au moins un composé (C) du type phosphate,
- éventuellement, au moins un support.

2. Utilisation selon la revendication 1, **caractérisée en ce que** ledit composé (A) est un silicate de sodium ou de potassium.

3. Utilisation selon l'une des revendications 1 et 2, **caractérisée en ce que** ledit composé (B) est un carbonate de sodium.

4. Utilisation selon l'une des revendications 1 à 3, **caractérisée en ce que** ledit composé (A) est un silicate de sodium et ledit composé (B) est un carbonate de sodium.

5. Utilisation selon l'une des revendications 1 à 4, **caractérisée en ce que** le rapport en poids composé (B) / composé (A) est compris entre 0,5 et 3,5, de préférence entre 1,1 et 2,5.

6. Utilisation selon l'une des revendication 1 à 5, **caractérisée en ce que** ledit composé (C) est choisi parmi les orthophosphates, les pyrophosphates, les tripolyphosphates, les métaphosphates, les hypophosphates, les monophosphates et les diphosphates de métal alcalin ou de métal alcalino-terreux.

7. Utilisation selon l'une des revendications 1 à 6, **caractérisée en ce que** ledit composé (C) est un orthophosphate de sodium ou de magnésium, un pyrophosphate de sodium ou de potassium ou un tripolyphosphate de sodium.

8. Utilisation selon l'une des revendication 1 à 7, **caractérisée en ce que** ledit composé (C) est un orthophosphate de sodium.

9. Utilisation selon l'une des revendications 1 à 8, **caractérisée en ce que** ledit agent présente une teneur en composé (C) comprise entre 1 et 30 %, de préférence entre 5 et 20 %, en poids.

10. Utilisation selon l'une des revendications 1 à 9, **caractérisée en ce que** ledit agent comprend au moins un support, ledit support étant une argile.

11. Utilisation selon l'une des revendications 1 à 10, **caractérisée en ce que** ledit agent présente une teneur en support comprise entre 5 et 90 % en poids, en particulier entre 10 et 35 % en poids.

12. Utilisation selon l'une des revendications 1 à 11, **caractérisée en ce que** ledit agent comprend en outre au moins un composé soufré (D), de préférence à une teneur comprise entre 0,01 et 5 %, en particulier entre 0,1 et 4 %, en poids.

13. Utilisation selon l'une des revendications 1 à 12, **caractérisée en ce que** lesdits métaux lourds sont choisis parmi le cadmium, le chrome, le cuivre, le nickel, le plomb, le zinc et le fer.

14. Utilisation selon l'une des revendications 1 à 13, **caractérisée en ce que** ledit effluent contient au moins du cadmium, du nickel et du plomb.

15. Utilisation selon l'une des revendications 1 à 14, **caractérisée en ce que** ledit effluent contient au moins du mercure.

16. Utilisation selon l'une des revendications 1 à 15, **caractérisée en ce que** ledit effluent est un effluent aqueux industriel.

17. Utilisation selon l'une des revendications 1 à 16, **caractérisée en ce que** ledit effluent est un effluent aqueux formé par les eaux de lavage des fumées d'incinération de déchets.

## Patentansprüche

1. Verwendung eines Mittels zur Entfernung von Schwermetallen, die in einem Abwasser enthalten sind, wobei das Mittel umfaßt:
- mindestens eine Verbindung (A), die aus einem Alkalimetallsilicat besteht,
- mindestens eine Verbindung (B), die aus einem Alkalimetallcarbonat besteht,
- mindestens eine Verbindung (C) des Phosphat-Typs,
- gegebenenfalls mindestens einen Träger.

2. Verwendung nach Anspruch 1, **dadurch gekennzeichnet, daß** die Verbindung (A) Natrium- oder Kaliumsilicat ist.

3. Verwendung nach Anspruch 1 oder Anspruch 2, **dadurch gekennzeichnet, daß** die Verbindung (B) Natriumcarbonat ist.

4. Verwendung nach einem der Ansprüche 1 bis 3, **dadurch gekennzeichnet, daß** die Verbindung (A) Natriumsilicat ist und die Verbindung (B) Natriumcarbonat ist.

5. Verwendung nach einem der Ansprüche 1 bis 4, **dadurch gekennzeichnet, daß** das Gewichtsverhältnis Verbindung (B)/Verbindung (A) zwischen 0,5 und 3,5, vorzugsweise zwischen 1,1 und 2,5 liegt.

6. Verwendung nach einem der Ansprüche 1 bis 5, **dadurch gekennzeichnet, daß** die Verbindung (C) unter den Alkalimetall- oder Erdalkalimetallorthophosphaten, -pyrophosphaten, -tripolyphosphaten, -metaphosphaten, -hypophosphaten, -monophosphaten und -diphosphaten ausgewählt ist.

7. Verwendung nach einem der Ansprüche 1 bis 6, **dadurch gekennzeichnet, daß** die Verbindung (C) Natriumorthophosphat oder Magnesiumorthophosphat, Natriumpyrophosphat oder Kaliumpyrophosphat oder Natriumtripolyphosphat ist.

8. Verwendung nach einem der Ansprüche 1 bis 7, **dadurch gekennzeichnet, daß** die Verwendung (C) Natriumorthophosphat ist.

9. Verwendung nach einem der Ansprüche 1 bis 8, **dadurch gekennzeichnet, daß** das Mittel einen Gehalt an Verbindung (C) aufweist, der zwischen 1 und 30 Gew.-%, vorzugsweise zwischen 5 und 20 Gew.-% liegt.

10. Verwendung nach einem der Ansprüche 1 bis 9, **dadurch gekennzeichnet, daß** das Mittel mindestens einen Träger umfaßt, wobei der Träger ein Ton ist.

11. Verwendung nach einem der Ansprüche 1 bis 10, **dadurch gekennzeichnet, daß** das Mittel einen Gehalt an Träger aufweist, der zwischen 5 und 90 Gew.-%, insbesondere zwischen 10 und 35 Gew.-% liegt.

12. Verwendung nach einem der Ansprüche 1 bis 11, **dadurch gekennzeichnet, daß** das Mittel außerdem mindestens eine Schwefel-Verbindung (D), vorzugsweise mit einem Gehalt zwischen 0,01 und 5 Gew.-%, insbesondere zwischen 0,1 und 4 Gew.-%, umfaßt.

13. Verwendung nach einem der Ansprüche 1 bis 12, **dadurch gekennzeichnet, daß** die Schwermetalle unter Cadmium, Chrom, Kupfer, Nickel, Blei, Zink und Eisen ausgewählt sind.

14. Verwendung nach einem der Ansprüche 1 bis 13, **dadurch gekennzeichnet, daß** das Abwasser mindestens Cadmium, Nickel und Blei enthält.

15. Verwendung nach einem der Ansprüche 1 bis 14, **dadurch gekennzeichnet, daß** das Abwasser mindestens Quecksilber enthält.

16. Verwendung nach einem der Ansprüche 1 bis 15, **dadurch gekennzeichnet, daß** das Abwasser ein industrielles Abwasser ist.

17. Verwendung nach einem der Anspruch 1 bis 16, **dadurch gekennzeichnet, daß** das Abwasser ein Abwasser ist, das durch das Waschwasser von Rauch aus der Abfallverbrennung gebildet wird.

## Claims

1. Use, for removing heavy metals contained in an aqueous effluent, of an agent comprising:
- at least one compound (A) consisting of an alkali metal silicate,
- at least one compound (B) consisting of an alkali metal carbonate,
- at least one compound (C) of the phosphate type,
- optionally at least one carrier.

2. Use according to claim 1, **characterized in that** the said compound (A) is a sodium or potassium silicate.

3. Use according to either of claims 1 and 2, **characterized in that** the said compound (B) is a sodium carbonate.

4. Use according to one of claims 1 to 3, **characterized in that** the said compound (A) is a sodium silicate and the said compound (B) is a sodium carbonate.

5. Use according to one of claims 1 to 4, **characterized in that** the compound (B)/compound (A) ratio by weight is between 0.5 and 3.5, preferably between 1.1 and 2.5.

6. Use according to one of claims 1 to 5, **characterized in that** the said compound (C) is chosen from alkali metal or alkaline earth metal orthophosphates, pyrophosphates, tripolyphosphates, metaphosphates, hypophosphates, monophosphates and diphosphates.

7. Use according to one of claims 1 to 6, **characterized in that** the said compound (C) is a sodium or magnesium orthophosphate, a sodium or potassium pyrophosphate or a sodium tripolyphosphate.

8. Use according to one of claims 1 to 7, **characterized in that** the said compound (C) is a sodium orthophosphate.

9. Use according to one of claims 1 to 8, **characterized in that** the said agent exhibits a content of compound (C) of between 1 and 30%, preferably between 5 and 20%, by weight.

10. Use according to one of claims 1 to 9, **characterized in that** the said agent comprises at least one carrier, the said carrier being a clay.

11. Use according to one of claims 1 to 10, **characterized in that** the said agent exhibits a content of carrier of between 5 and 90% by weight, in particular between 10 and 35% by weight.

12. Use according to one of claims 1 to 11, **characterized in that** the said agent additionally comprises at least one sulphur compound (D), preferably at a content of between 0.01 and 5%, in particular between 0.1 and 4%, by weight.

13. Use according to one of claims 1 to 12, **characterized in that** the said heavy metals are chosen from cadmium, chromium, copper, nickel, lead, zinc and iron.

14. Use according to one of claims 1 to 13, **characterized in that** the said effluent contains at least cadmium, nickel and lead.

15. Use according to one of claims 1 to 14, **characterized in that** the said effluent contains at least mercury.

16. Use according to one of claims 1 to 15, **characterized in that** the said effluent is an aqueous industrial effluent.

17. Use according to one of claims 1 to 16, **characterized in that** the said effluent is an aqueous effluent formed by aqueous liquors from the washing of flue gases from the incineration of waste.
